# EUROPEAN PATENT APPLICATION

(11) **EP 4 811 473 A1**
(43) Date of publication of application: **23.09.2026**
(21) Application number: 24890126.6
(22) Date of filing: 01.07.2024
(51) Int. Cl.: H01M 8/249, H02J 3/32, H02J 3/38, H02J 15/00

(54) **FLOW BATTERY ENERGY STORAGE SYSTEM OF 30MW AND ABOVE**

(30) Priority: 17.11.2023 CN 202311542760
(71) Applicant: Jiangsu Longvault Energy Technology Co., Ltd., Suzhou, Jiangsu 215237 (CN)
(72) Inventor: MA, Zhiqi, Shanghai 201600 (CN); XU, Yan, Shanghai 201600 (CN)
(74) Representative: Sun, Yiming
(86) International application number: PCT/CN2024/102875
(87) International publication number: WO 2025/102757

(57) **Abstract**

Disclosed in the present invention is a flow battery energy storage system of 30 MW level and above, which comprises more than eight fluid process systems. A positive electrolyte storage tank and a negative electrolyte storage tank of each fluid process system are respectively connected to a positive electrode current equalizer and a negative electrode current equalizer by means of transfer pumps, the current equalizers supplying electrolyte to positive electrodes and negative electrodes of all battery stacks in the system simultaneously, and the electrolyte from an electrolyte outlet of each battery stack being combined and flowing back to the electrolyte storage tanks by means of another positive electrode current equalizer and negative electrode current equalizer separately. The battery stacks with the corresponding serial numbers in the fluid process systems are connected in series, and each string of battery stacks is externally connected to a converter device. The present invention adds current equalizers or multi-stage distribution pipelines for battery stacks, so as to achieve uniform fluid distribution, and reduce the flow difference. In addition, using advanced converter devices overcomes the problems of system energy loss or low reliability and stability caused by a circuit topology between a conventional battery stack and DC/DC and/or AC/DC, as well as the limitations of low integration and small power scale, generally not greater than 500 kW of individual energy storage systems.

## Description

### TECHNICAL FIELD

The present disclosure relates to the field of flow batteries, and particularly relates to a flow battery energy storage system of 30 MW or above.

### BACKGROUND

A flow battery is a new type of electrochemical energy storage system. The flow battery can implement charging and discharging through an oxidation-reduction reaction between active ions contained in a positive electrode electrolyte and active ions contained in a negative electrode electrolyte. For a large-scale energy storage system, output power of a single battery stack is far from satisfying output requirements of the system. Generally, output power of the energy storage system is improved by connecting a plurality of battery stacks in series or in parallel, to satisfy requirements of the output power of the large-scale energy storage system.

In the technologies related to a flow battery energy storage system of 30 MW or above, in order to ensure consistency of charging and discharging of all battery stacks, all the battery stacks are connected in parallel on a liquid circuit pipeline, such that the parameters such as a state of charge of an electrolyte of each battery stack are identical. However, an existing liquid circuit connection mode fails to take into account the problems of fluid distribution between battery stacks and upper and lower limits of series voltages of the battery stacks, making it difficult to ensure consistency of battery stack performance and potentially leading to series current limitation problems. In addition, in a charging and discharging process, when series currents of the battery stacks are identical, a liquid circuit conductive network can still be formed in a liquid circuit pipeline system at different battery stack voltages, resulting in liquid circuit bypass currents between the battery stacks and causing energy loss. Moreover, the large-scale energy storage system is generally composed of a plurality of small energy storage systems, and power of each small energy storage system is generally not greater than 500 kW. The systems are scattered and complicated, seriously affecting reliability and stability of the energy storage system.

### SUMMARY

An objective of the present disclosure is to provide a flow battery energy storage system of 30 MW or above, to solve a problem of high-efficiency integration of a flow battery energy storage system, eliminate bypass currents, and ensure integrated mounting and consistent operation of battery stacks in the system. Meanwhile, an advanced converting technology, namely a converting technology combining conventional AC/DC and a phase-shifting transformer, is used to solve problems of system energy loss or low reliability and stability caused by current circuits of conventional DC/DC or AC/DC. Finally, a problem that a low-voltage flow battery energy storage system cannot be directly connected to a high-voltage power grid is solved. In this way, a single energy storage system may reach 30 MW or above and form an ultra-large-scale monolithic energy storage system highly integrated.

A technical solution of the present disclosure is as follows:
The flow battery energy storage system of 30 MW or above includes more than 8 groups of fluid process systems. Each group of fluid process system includes a plurality of battery stacks, a positive electrode electrolyte storage tank, a negative electrode electrolyte storage tank, a positive electrode electrolyte pump, a negative electrode electrolyte pump, a pair of positive electrode flow equalizers, and a pair of negative electrode flow equalizers.

The positive electrode electrolyte storage tank and the negative electrode electrolyte storage tank are connected to one positive electrode flow equalizer and one negative electrode flow equalizer through the positive electrode electrolyte delivery pump and the negative electrode electrolyte delivery pump, respectively. The positive electrode flow equalizers and the negative electrode flow equalizers simultaneously supply electrolytes to positive electrodes and negative electrodes of all the battery stacks in the group, respectively. A positive electrode electrolyte supply outlet and a negative electrode electrolyte supply outlet of each of the battery stacks converge and return to the positive electrode electrolyte storage tank and the negative electrode electrolyte storage tank through the other positive electrode flow equalizer and the other negative electrode flow equalizer, respectively.

A quantity of battery stacks in each group of fluid process system is identical. The battery stacks in corresponding sequences between all the groups of fluid process systems are connected in series to form a string of battery stacks. Each string of battery stacks is externally connected to one set of converter apparatus.

Preferably, in each fluid process system, if a positive electrode or a negative electrode of a flow battery is in a solid state, an electrolyte storage tank, an electrolyte delivery pump, a pipeline, and a flow equalizer of the fluid process system are provided on only one side.

Preferably, in the fluid process systems, a quantity of the fluid process systems is represented by N, and N > 8. Serial numbers of the fluid process systems are represented by i, and 1 ≤ i ≤ N. Positive electrode electrolytes and negative electrode electrolytes of each group of fluid process system are independent of each other.

Preferably, in the fluid process systems, every K of the battery stacks in each group of process system are mounted in one module to form one energy storage power module, K ≥ 16, serial numbers of the battery stacks in the power module are represented by k, and 1 ≤ k ≤ K. A total quantity of power modules is represented by M, M ≥ 16, serial numbers of the power modules are represented by j, and 1 ≤ j ≤ M. Large-scale fluid pumps for positive electrode electrolytes and negative electrode electrolytes are rationally selected, such that the delivered electrolyte with a great flow rate may support stable charging and discharging operation of the M power modules having total power of not less than 4 MW.

Preferably, in N groups of fluid process systems, each group of process system has M power modules. In this case, total power of a monolithic energy storage system may be much greater than 8 × 4 MW=32 MW.

Preferably, frames or containers are used as the modules of the fluid process systems, and are constructed in a manner of stacking building blocks during engineering construction, to improve construction efficiency of an energy storage power station.

Preferably, bidirectional AC/DC converters and isolation transformers are used as the converter apparatuses. Each string of battery stacks is connected to an alternating current bus or a transformer bay through the bidirectional AC/DC converter and the isolation transformer that are connected in sequence, to achieve a function of storing or releasing electricity.

Preferably, AC/DC converters and phase-shifting transformers are used as the converter apparatuses. Each string of battery stacks is connected to the AC/DC converter, and all the AC/DC converters are connected to high-voltage buses or transformer bays and further connected to a power grid through the same phase-shifting transformer.

Preferably, bidirectional high-frequency isolation AC/DC converters are used as the converter apparatuses. Each string of battery stacks is connected to an alternating current bus or an alternating current combiner output and further connected to a power grid through the bidirectional high-frequency isolation AC/DC converter.

The present disclosure has the advantages:
1. In the flow battery energy storage system of the present disclosure, flow equalizers or multistage distribution pipelines of the battery stacks are added to implement uniform distribution of fluid and reduce a flow difference to not greater than 5%.
2. The present disclosure limits a series voltage of the battery stacks to not less than 500 V and not greater than 1500 V, to avoid insufficient insulation performance of the system and easy occurrence of electric leakage faults.
3. The present disclosure uses a converting technology combining AC/DC and the phase-shifting transformer, and an output voltage level may be higher than 35 kV, thus implementing high-voltage direct connection.
4. In practical engineering applications, the present disclosure is subject to flow rate limitations of liquid pumps, which makes it impossible to support an excessive quantity of battery stacks. This problem is certainly related to power ratings and required flow rates of the battery stacks, and the quantity of battery stacks in each group of fluid process system is generally set at 256.
5. The present disclosure uses a power conversion system (PCS) for energy storage to limit power, and the total power of the battery stacks connected in series is not greater than 2.5 MW.
6. The present disclosure clearly breaks through the bottleneck of small scale and low power of a common monolithic flow battery energy storage system. An ultra-large-scale monolithic energy storage system may be built, with the total power being much greater than 32 MW and even reaching 64 MW or above. In this way, integration, reliability and stability of the energy storage system are significantly improved.
7. In the present disclosure, the power of each battery stack may be 150 kW or below, to implement system integration of high-power battery stacks.

### BRIEF DESCRIPTION OF THE DRAWINGS

The present disclosure will be further described below in conjunction with drawings and embodiments:
FIG. 1 is a topology of a flow battery energy storage system of the present disclosure;
FIG. 2 is a topology of connecting a battery stack string to an alternating current bus or a transformer bay through a bidirectional alternating current/direct current (AC/DC) converter and an isolation transformer;
FIG. 3 is a topology of connecting a battery stack string to a high-voltage bus or a transformer bay and further to a power grid through an AC/DC converter and a phase-shifting transformer; and
FIG. 4 is a topology of connecting a battery stack string to an alternating current bus or an alternating current combiner output and further to a power grid through a bidirectional high-frequency isolation AC/DC converter.

### DETAILED DESCRIPTION

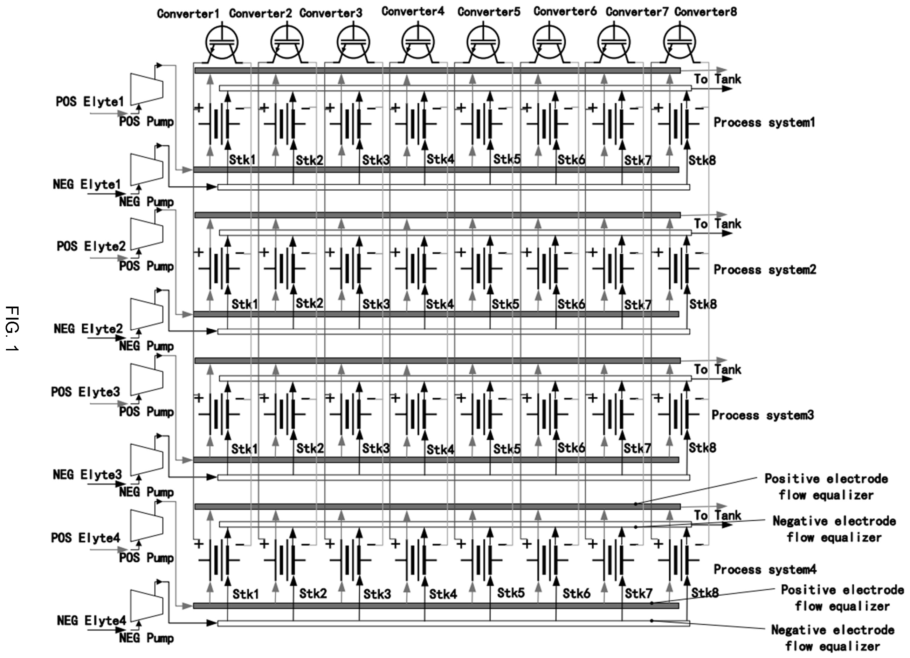

As shown in FIG. 1, a flow battery energy storage system of the present disclosure includes more than 8 groups of fluid process systems. Each group of fluid process system includes a plurality of battery stacks, a positive electrode electrolyte storage tank, a negative electrode electrolyte storage tank, a positive electrode electrolyte pump, a negative electrode electrolyte pump, a pair of positive electrode flow equalizers, and a pair of negative electrode flow equalizers. The positive electrode electrolyte storage tank and the negative electrode electrolyte storage tank are connected to one positive electrode flow equalizer and one negative electrode flow equalizer through the positive electrode electrolyte delivery pump and the negative electrode electrolyte delivery pump, respectively. The positive electrode flow equalizers and the negative electrode flow equalizer simultaneously supply electrolytes to positive electrodes and negative electrodes of all the battery stacks in the group, respectively. A positive electrode electrolyte supply outlet and a negative electrode electrolyte supply outlet of each of the battery stacks converge and return to the positive electrode electrolyte storage tank and the negative electrode electrolyte storage tank through the other positive electrode flow equalizer and the other negative electrode flow equalizer, respectively. Thus, it is ensured that positive electrode electrolytes and negative electrode electrolytes of all battery stacks in each process system have an identical flow rate.

In the flow battery energy storage system of 30 MW or above, a quantity of the fluid process systems is represented by N, and N > 8, serial numbers of the fluid process systems are represented by i, and 1 ≤ i ≤ N. Positive electrode electrolytes and negative electrode electrolytes of each group of fluid process system are independent of each other.

Every 16 of the battery stacks in each group of process system are mounted in one container-sized frame or container (when the quantity of battery stacks does not exceed 16, only one frame or container is required). In this way, construction in a manner of stacking building blocks is facilitated during engineering construction, and construction efficiency of an energy storage power station is improved. A total quantity of frames or containers is represented by M, and is generally not less than 16. The total quantity M of frames or containers is an even number. Serial numbers of the frames or containers are represented by j, and 1 ≤ j ≤ M. A quantity of battery stacks in each frame or container is represented by K, and should be an even number, and K ≥ 16. Serial numbers of the internal battery stacks are represented by k, and 1 ≤ k ≤ K.

The battery stacks having corresponding serial numbers between all the groups of fluid process systems are connected in series to form one string of battery stacks. Each string of battery stacks corresponds to one piece or one set of converter apparatus, such as high-frequency isolation DC/DC, a combination of high-frequency isolation DC/DC and conventional AC/DC, and high-frequency isolation AC/DC. For example, a k-th battery stack of a j-th frame or container of a first group of fluid process system is connected in series to a k-th battery stack of a j-th frame or container of a second group of fluid process system, ..., and then connected in series to a k-th battery stack of a j-th frame or container of an i-th group of fluid process system, ..., and the series connection continues until the battery stack is connected in series to a k-th battery stack of a j-th frame or container of a final N-th group of fluid process system. Specifically, 1 ≤ j ≤ M, M ≥ 16, 1 ≤ k ≤ K, K ≥ 16, 1 ≤ i ≤ N, and N>8.

In each fluid process system, if a positive electrode or a negative electrode of a flow battery is in a solid state, and for example, without electrolyte flows, an electrolyte storage tank, an electrolyte delivery pump, a pipeline, and a flow equalizer of the fluid process system are provided on only one side.

### Embodiment 2

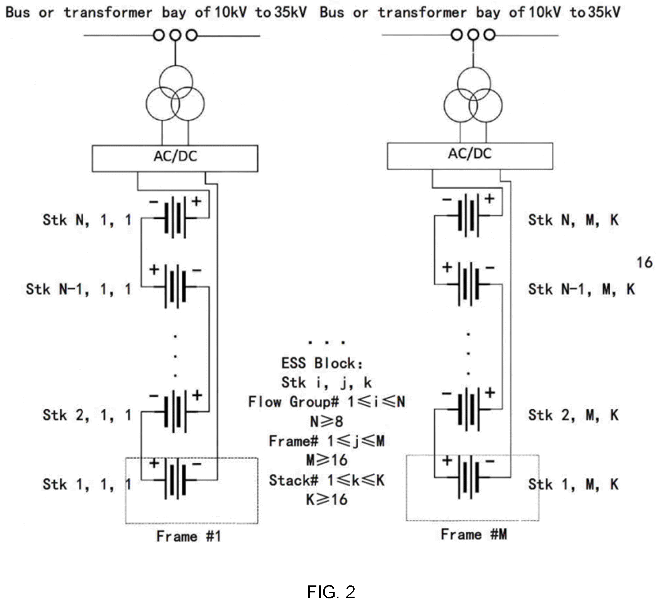

As shown in FIG. 2, when a total voltage of each string of battery stacks is not less than 500 V, each string of battery stacks may be connected to a conventional AC/DC bidirectional converter to convert a direct current of a battery stack string to a three-phase alternating current. Then, each AC/DC may be connected to an isolation transformer, and then may be connected to an alternating current bus or a transformer bay of 10 kV to 35 kV. The flow battery energy storage system may achieve a function of storing or releasing electricity under certain control logic.

### Embodiment 3

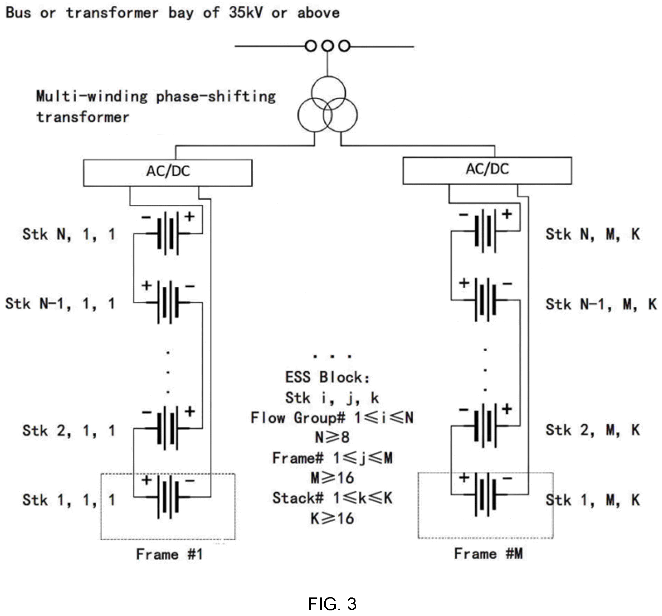

As shown in FIG. 3, AC/DC converters and phase-shifting transformers are used as the converter apparatuses. Each string of battery stacks is connected to the AC/DC converter, and outputs of all the AC/DC converters are connected to 35 kV high-voltage buses or transformer bays and further connected to a power grid through the same phase-shifting transformer.

### Embodiment 4

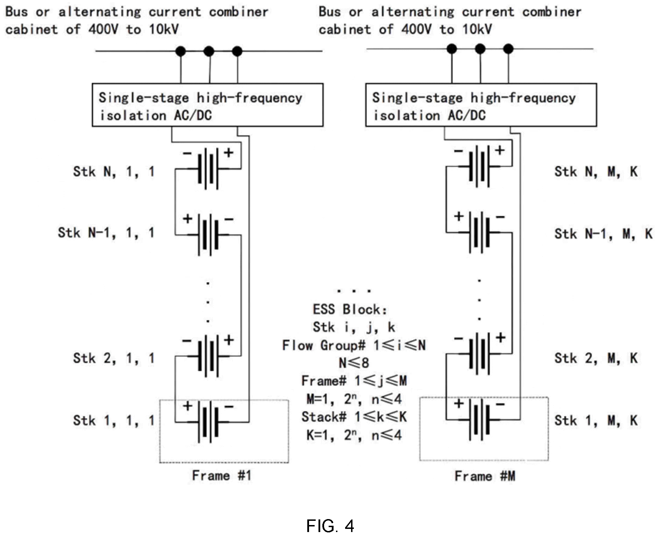

As shown in FIG. 4, bidirectional high-frequency isolation AC/DC converters are used as the converter apparatuses. Each string of battery stacks is connected to a 400 V to 10 kV alternating current bus or an alternating current combiner output and further connected to a power grid through the bidirectional high-frequency isolation AC/DC converter.

The above embodiments are only for explaining technical concepts and characteristics of the present disclosure, aim to enable those of ordinary skill in the art to know the content of the present disclosure and implement the present disclosure, and are not intended to limit the protection scope of the present disclosure. Any modifications made in accordance with the spirit of the main technical solution of the present disclosure should fall within the protection scope of the present disclosure.

## Claims

1. A flow battery energy storage system of 30 MW or above, **characterized by** comprising more than 8 groups of fluid process systems, wherein each group of fluid process system comprises a plurality of battery stacks, a positive electrode electrolyte storage tank, a negative electrode electrolyte storage tank, a positive electrode electrolyte pump, a negative electrode electrolyte pump, a pair of positive electrode flow equalizers, and a pair of negative electrode flow equalizers;
the positive electrode electrolyte storage tank and the negative electrode electrolyte storage tank are connected to one positive electrode flow equalizer and one negative electrode flow equalizer through the positive electrode electrolyte delivery pump and the negative electrode electrolyte delivery pump, respectively, the positive electrode flow equalizers and the negative electrode flow equalizers simultaneously supply electrolytes to positive electrodes and negative electrodes of all the battery stacks in the group, respectively, and a positive electrode electrolyte supply outlet and a negative electrode electrolyte supply outlet of each of the battery stacks converge and return to the positive electrode electrolyte storage tank and the negative electrode electrolyte storage tank through the other positive electrode flow equalizer and the other negative electrode flow equalizer, respectively; and
a quantity of battery stacks in each group of fluid process system is identical, the battery stacks in corresponding sequences between all the groups of fluid process systems are connected in series to form a string of battery stacks, and each string of battery stacks is externally connected to one set of converter apparatus.

2. The flow battery energy storage system according to claim 1, **characterized in that** in each fluid process system, if a positive electrode or a negative electrode of a flow battery is in a solid state, an electrolyte storage tank, an electrolyte delivery pump, a pipeline, and a flow equalizer of the fluid process system are provided on only one side.

3. The flow battery energy storage system according to claim 1, **characterized in that** in the fluid process systems, a quantity of the fluid process systems is represented by N, and N > 8; serial numbers of the fluid process systems are represented by i, and 1 ≤ i ≤ N; and positive electrode electrolytes and negative electrode electrolytes of each group of fluid process system are independent of each other.

4. The flow battery energy storage system according to claim 1, **characterized in that** in the fluid process systems, every K of the battery stacks in each group of process system are mounted in one module to form one energy storage power module, K ≥ 16, serial numbers of the battery stacks in the power module are represented by k, and 1 ≤ k ≤ K; a total quantity of power modules is represented by M, M ≥ 16, serial numbers of the modules are represented by j, and 1 ≤ j ≤ M; and large-scale fluid pumps for positive electrode electrolytes and negative electrode electrolytes are rationally selected to support stable charging and discharging operation of the M power modules having total power of not less than 4 MW.

5. The flow battery energy storage system according to claim 4, **characterized in that** frames or containers are used as the modules of the fluid process systems, and are constructed in a manner of stacking building blocks during engineering construction, to improve construction efficiency of an energy storage power station.

6. The flow battery energy storage system according to claim 4, **characterized in that** bidirectional alternating current/direct current (AC/DC) converters and isolation transformers are used as the converter apparatuses, and each string of battery stacks is connected to an alternating current bus or a transformer bay through the bidirectional AC/DC converter and the isolation transformer that are connected in sequence, to achieve a function of storing or releasing electricity.

7. The flow battery energy storage system according to claim 4, **characterized in that** AC/DC converters and phase-shifting transformers are used as the converter apparatuses, each string of battery stacks is connected to the AC/DC converter, and all the AC/DC converters are connected to high-voltage buses or transformer bays and further connected to a power grid through the same phase-shifting transformer.

8. The flow battery energy storage system according to claim 4, **characterized in that** bidirectional high-frequency isolation AC/DC converters are used as the converter apparatuses, and each string of battery stacks is connected to an alternating current bus or an alternating current combiner output and further connected to a power grid through the bidirectional high-frequency isolation AC/DC converter.
